# EUROPEAN PATENT SPECIFICATION

(11) **EP 3 076 634 B1**
(45) Date of publication and mention of the grant of the patent: **20.11.2019**
(21) Application number: 15804301.8
(22) Date of filing: 16.07.2015
(51) Int. Cl.: G06Q 30/02, H04L 29/06, H04L 29/08, H04W 4/20, H04W 4/21, H04N 21/41, H04N 21/81, H04N 21/222, H04W 4/02, H04N 21/45

(54) **METHOD FOR PLAYING MEDIA CONTENT, SERVER AND DISPLAY APPARATUS**
VERFAHREN ZUR WIEDERGABE VON MEDIENINHALTEN, SERVER UND ANZEIGEVORRICHTUNG
PROCÉDÉ DE LECTURE DE CONTENU MULTIMÉDIA, SERVEUR ET APPAREIL D'AFFICHAGE

(30) Priority: 03.02.2015 CN 201510057228
(43) Date of publication of application: 05.10.2016
(60) Divisional application: 19169450.4
(73) Proprietor: Huawei Technologies Co., Ltd., Longgang District Shenzhen, Guangdong 518129 (CN); Ekstrand, Simon, Eslov 999027 (SE)
(72) Inventor: EKSTRAND, Simon, 999027 Eslov (SE); CHENG, Cheng, Shenzen, Guangdong 518129 (CN)
(74) Representative: Maiwald Patent- und Rechtsanwaltsgesellschaft mbH
(86) International application number: PCT/CN2015/084181
(87) International publication number: WO 2016/123909

(56) References cited:
- CN-A- 103 581 285
- CN-A- 103 748 610
- CN-A- 104 618 376
- GB-A- 2 495 088
- US-A1- 2010 162 322
- US-A1- 2013 347 018
- US-A1- 2014 047 072
- US-A1- 2014 074 621
- US-A1- 2014 106 664
- US-A1- 2014 282 691

## Description

### TECHNICAL FIELD

Embodiments of the present invention relate to the field of multimedia applications, and more specifically, to a media content playing method, a server, and a display apparatus.

### BACKGROUND

Media content that can be watched/read by users usually includes advertisement content of various forms, such as an implanted advertisement or an inserted advertisement. Current advertisement playing either interrupts or even stops media content watching/reading experience of a user, or although the implanted advertisement does not affect the media watching/reading experience of the user directly, an advertisement effect and buying experience are not directly connected well, and an advertisement effect of advertisement media content is not fully exerted.

US 2013/347018 A1 describes systems and methods for user viewing a presentation of media content that can obtain related supplemental content through the same or a different interface, on the same or a different device. A listener or other such component can attempt to detect information about the media, such as tags present in the media, the occurrence of songs or people in the media, and other such information.

US 2014/047072 A1 describes systems and methods for user viewing of content which is related to content being displayed on an out-of-home display screen is synchronized with being shown on an out-of-home display screen. A therein described mobile device operates to receive content which is related to the content being displayed on the out-of-home display screen.

GB 2 495 088 A describes methods and devices for interactive mobile offer system using time and location for out-of-home display screens.

US 2014/106664 A1 describes methods and devices for achieves wireless delivery of media streams to portable devices for providing media information related to a show or attraction for the purposes of captioning, language translation, and assistive listening.

US 2014/282691 A1 discloses a supplemental content retrieval system for playing supplemental video content on a video player.

### SUMMARY

The present invention provides a media content playing method, and a server, as defined by the independent claims, so that a user can watch/read second media content corresponding to the first media content by using another display apparatus at the same time while watching/reading of first media content by the user is not affected, and when the second media content is an advertisement, an advertisement effect of the first media content can further be fully exerted. Further embodiments are defined by the dependent claims.

According to a first aspect, a media content playing method is provided, including: receiving, by a first server, a first request of a user, where the first request is used to instruct to send first media content to a first display apparatus; sending, by the first server, the first media content to the first display apparatus according to the first request, so that the first display apparatus plays the first media content; and sending, by the first server, first information corresponding to the first media content to a second server, so that the second server sends second media content corresponding to the first information to a second display apparatus that is associated with the first display apparatus, and the second display apparatus is configured to play the second media content.

With reference to the first aspect, in a first possible implementation manner, the method further includes: receiving, by the first server, a second request that is sent by the second display apparatus and includes second information, where the second information corresponds to third media content that is currently presented on the second display apparatus; determining, by the first server according to the second request, fourth media content corresponding to the second information; and sending, by the first server, the fourth media content to a third display apparatus that is associated with the second display apparatus.

With reference to the first possible implementation manner, in a second possible implementation manner, the second request further includes identification information of the second display apparatus, and before the sending, by the first server, the second media content to a third display apparatus that is associated with the second display apparatus, the method further includes: determining, by the first server, the third display apparatus according to the identification information.

With reference to the second possible implementation manner, in a third possible implementation manner, the identification information includes geographic location information of the second display apparatus or information about a network to which the second display apparatus currently connects.

According to a second aspect, a media content playing method is provided, including: receiving, by a second server, first information sent by a first server, where the first information corresponds to first media content that is currently played by a first display apparatus; and sending, by the second server, second media content corresponding to the first information to a second display apparatus that is associated with the first display apparatus, so that the second display apparatus plays the second media content.

With reference to the second aspect, in a first possible implementation manner of the second aspect, the sending, by the second server, second media content corresponding to the first information to a second display apparatus includes: determining, by the second server, the second media content corresponding to the first information; generating, by the second server, an electronic magazine including the second media content; and sending, by the second server, the electronic magazine to the second display apparatus.

With reference to the second aspect or the first possible implementation manner of the second aspect, in a second possible implementation manner of the second aspect, before the sending, by the second server, second media content corresponding to the first information to a second display apparatus that is associated with the first display apparatus, the method further includes: receiving, by the second server, identification information that is of the first display apparatus and sent by the first server; and determining, by the second server, the second display apparatus according to the identification information.

With reference to the second possible implementation manner of the second aspect, in a third possible implementation manner of the second aspect, the identification information includes geographic location information of the first display apparatus or information about a network to which the first display apparatus currently connects.

According to a third aspect, a media content playing method is provided, including: receiving, by a second display apparatus, second media content sent by a second server, where the second media content corresponds to first media content that is currently played by a first display apparatus; and playing, by the second display apparatus, the second media content.

With reference to the third aspect, in a first possible implementation manner of the third aspect, the receiving, by a second display apparatus, second media content sent by a second server includes: receiving, by the second display apparatus, an electronic magazine that includes the second media content and that is sent by the second server.

With reference to the first possible implementation manner of the third aspect, in a second possible implementation manner of the third aspect, the method further includes: receiving, by the second display apparatus, a first request of a user, where the first request is used to instruct to play fourth media content corresponding to currently presented third media content; and sending, by the second display apparatus, a second request to a first server, where the second request includes second information corresponding to the third media content, and the second request is used to instruct the first server to send the fourth media content to a third display apparatus that is associated with the second display apparatus, so that the third display apparatus plays the fourth media content.

With reference to the second possible implementation manner of the third aspect, in a third possible implementation manner of the third aspect, the second request further includes identification information of the second display apparatus.

With reference to the third possible implementation manner of the third aspect, in a fourth possible implementation manner of the third aspect, the identification information includes geographic location information of the second display apparatus and/or information about a network to which the second display apparatus currently connects.

According to a fourth aspect, a server is provided, including: a receiving unit, configured to receive a first request of a user, where the first request is used to instruct to send first media content to a first display apparatus; and a sending unit, configured to send the first media content to the first display apparatus according to the first request, so that the first display apparatus plays the first media content; where the sending unit is further configured to send first information corresponding to the first media content to a second server, so that the second server sends second media content corresponding to the first information to a second display apparatus that is associated with the first display apparatus, and the second display apparatus is configured to play the second media content.

With reference to the fourth aspect, in a first possible implementation manner of the fourth aspect, the receiving unit is further configured to receive a second request that is sent by the second display apparatus and includes second information, where the second information corresponds to third media content that is currently presented on the second display apparatus; the server further includes: a processing unit, configured to determine, according to the second request, fourth media content corresponding to the second information; and the sending unit is further configured to send the fourth media content to a third display apparatus that is associated with the second display apparatus.

With reference to the first possible implementation manner of the fourth aspect, in a second possible implementation manner of the fourth aspect, the second request further includes identification information of the second display apparatus, and the processing unit is further configured to: before the sending unit sends the second media content to the third display apparatus that is associated with the second display apparatus, determine the third display apparatus according to the identification information.

With reference to the second possible implementation manner of the fourth aspect, in a third possible implementation manner of the fourth aspect, the identification information includes geographic location information of the second display apparatus or information about a network to which the second display apparatus currently connects.

According to a fifth aspect, a server is provided, including: a receiving unit, configured to receive first information sent by a first server, where the first information corresponds to first media content that is currently played by a first display apparatus; and a sending unit, configured to send second media content corresponding to the first information to a second display apparatus that is associated with the first display apparatus, so that the second display apparatus plays the second media content.

With reference to the fifth aspect, in a first possible implementation manner of the fifth aspect, the server further includes: a processing unit, configured to: determine the second media content corresponding to the first information; and generate an electronic magazine including the second media content; where the sending unit is further configured to send the electronic magazine to the second display apparatus.

With reference to the fifth aspect or the first possible implementation manner of the fifth aspect, in a second possible implementation manner of the fifth aspect, the receiving unit is further configured to: before the sending unit sends the second media content corresponding to the first information to the second display apparatus that is associated with the first display apparatus, receive identification information that is of the first display apparatus and sent by the first server; and the processing unit is further configured to determine the second display apparatus according to the identification information.

With reference to the second possible implementation manner of the fifth aspect, in a third possible implementation manner of the fifth aspect, the identification information includes geographic location information of the first display apparatus or information about a network to which the first display apparatus currently connects.

According to a sixth aspect, a display apparatus is provided, including: a receiving unit, configured to receive second media content sent by a second server, where the second media content corresponds to first media content that is currently played by a first display apparatus; and a display unit, configured to play the second media content.

With reference to the sixth aspect, in a first possible implementation manner of the sixth aspect, the receiving unit is specifically configured to receive an electronic magazine that includes the second media content and that is sent by the second server.

With reference to the sixth aspect or the first possible implementation manner of the sixth aspect, in a second possible implementation manner of the sixth aspect, the receiving unit is further configured to receive a first request of a user, where the first request is used to instruct to play fourth media content corresponding to currently presented third media content; the display apparatus further includes: a sending unit, configured to send a second request to a first server, where the second request includes second information corresponding to the third media content, and the second request is used to instruct the first server to send the fourth media content to a third display apparatus that is associated with the second display apparatus, so that the third display apparatus plays the fourth media content.

With reference to the second possible implementation manner of the sixth aspect, in a third possible implementation manner of the sixth aspect, the second request further includes identification information of the second display apparatus.

With reference to the third possible implementation manner of the sixth aspect, in a fourth possible implementation manner of the sixth aspect, the identification information includes geographic location information of the second display apparatus and/or information about a network to which the second display apparatus currently connects.

According to the foregoing technical solutions of the present invention, at the same time when first media content is played, another server is allowed to send second media content corresponding to the first media content to another display apparatus, so that a user can watch/read the second media content at the same time while watching/reading of the first media content by the user is not affected, and when the second media content is an advertisement, an advertisement effect of the first media content can further be fully exerted.

### BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic flowchart of a media content playing method according to an embodiment of the present invention;
FIG. 2 is a schematic flowchart of a media content playing method according to another embodiment of the present invention;
FIG. 3 is a schematic flowchart of a media content playing method according to another embodiment of the present invention;
FIG. 4 is a schematic diagram of a media content playing method according to an embodiment of the present invention;
FIG. 5 is a schematic flowchart of a media content playing method according to another embodiment of the present invention;
FIG. 6 is a schematic block diagram of a server according to an embodiment of the present invention;
FIG. 7 is a schematic block diagram of a server according to another embodiment of the present invention;
FIG. 8 is a schematic block diagram of a server according to an embodiment of the present invention;
FIG. 9 is a schematic block diagram of a server according to another embodiment of the present invention;
FIG. 10 is a schematic block diagram of a display apparatus according to an embodiment of the present invention;
FIG. 11 is a schematic block diagram of a display apparatus according to another embodiment of the present invention;
FIG. 12 is a schematic block diagram of a server according to still another embodiment of the present invention;
FIG. 13 is a schematic block diagram of a server according to still another embodiment of the present invention;
FIG. 14 is a schematic block diagram of a server according to still another embodiment of the present invention;
FIG. 15 is a schematic block diagram of a server according to still another embodiment of the present invention;
FIG. 16 is a schematic block diagram of a display apparatus according to still another embodiment of the present invention; and
FIG. 17 is a schematic block diagram of a display apparatus according to still another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

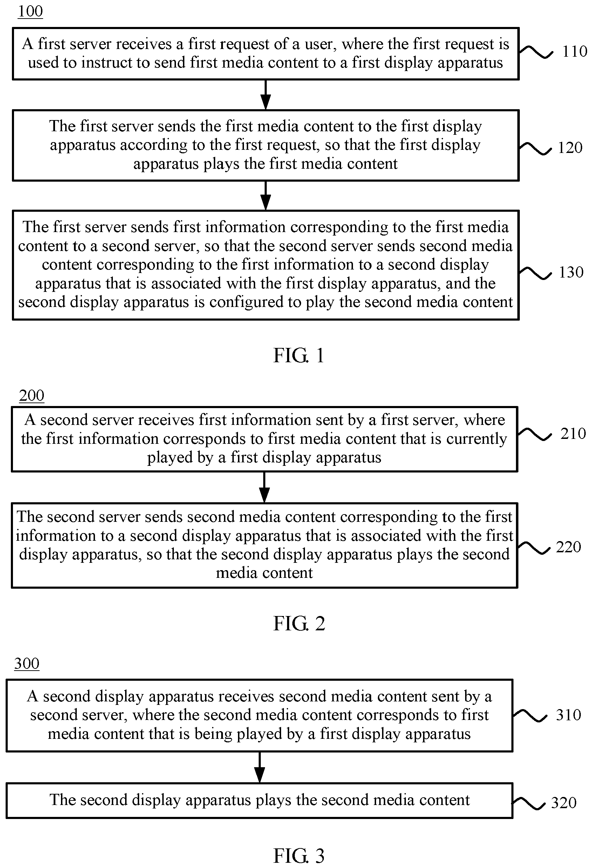

FIG. 1 is a schematic flowchart of a media content playing method 100 according to an embodiment of the present invention. As shown in FIG. 1, the method 100 includes the following content.

110. A first server receives a first request of a user, where the first request is used to instruct to send first media content to a first display apparatus.

The first display apparatus may be a display apparatus that is used by a user to watch/read media content. For example, the first display apparatus may be a television, a projector, a display, a computer, or the like. The media content may be a movie, a TV series, a video, music, an electronic book, or the like.

120. The first server sends the first media content to the first display apparatus according to the first request, so that the first display apparatus plays the first media content.

130. The first server sends first information corresponding to the first media content to a second server, so that the second server sends second media content corresponding to the first information to a second display apparatus that is associated with the first display apparatus, and the second display apparatus is configured to play the second media content.

The first information is information associated with the first media content, for example, the first information may be information such as a keyword, an actor name, and advertisement information of the first media content. When the first information is a keyword of the first media content, the second media content is media content having a same or similar keyword; or when the first information is an actor name, the second media content may be other media content in which the actor plays; or when the first information is corresponding advertisement information (for example, a keyword, a trademark, or a serial number in an advertisement) in the first media content, the second media content may be an advertisement corresponding to the advertisement information.

The second display apparatus may be a terminal that is used by a user and has a screen. For example, the second display apparatus may be a mobile phone, a tablet, a smart watch, or the like.

The second display apparatus is associated with the first display apparatus. For example, the second display apparatus and the first display apparatus connect to a same network, a physical distance between the second display apparatus and the first display apparatus is within a preset range, or the second display apparatus and the first display apparatus have a same name or ID.

For example, a clip of an advertisement is implanted in a movie that is being played in a cinema, and media content server sends information about the advertisement to the second server. After receiving the information about the advertisement, the second server sends the advertisement to a mobile phone that is used by an audience in the cinema.

Therefore, according to the media content playing method in this embodiment of the present invention, at the same time when a first display apparatus plays first media content, another server is allowed to send second media content corresponding to the first media content to a second display apparatus, so that a user can watch/read the second media content at the same time while watching/reading of the first media content by the user is not affected, and when the second media content is an advertisement, an advertisement effect of the first media content can further be fully exerted.

When the second media content is an advertisement, the user watches/reads an advertisement associated with media content by using a terminal (for example, a mobile phone) at the same time of watching/reading the media content, which can deepen an impression of the user on the advertisement, and stimulate a desire of the user to buy.

Optionally, as another embodiment, the method 100 may further include:
receiving, by the first server, a second request message that is sent by the second display apparatus and includes second information, where the second information corresponds to third media content that is currently presented on the second display apparatus;
determining, by the first server according to the second request, fourth media content corresponding to second advertisement information; and
sending, by the first server, the fourth media content to a third display apparatus that is associated with the second display apparatus.

It should be understood that, the third display apparatus and the first display apparatus may be a same display apparatus, or may be different display apparatuses.

The third media content may be an advertisement, and correspondingly, the fourth media content may be media content corresponding to the advertisement. It should be understood that, the fourth media content may be complete media content, or may be a clip, from the media content, showing the advertisement. For example, the fourth media content may be a movie implanted with the advertisement or a clip, from the movie, showing the advertisement.

For example, in a cinema, an advertisement corresponding to a movie that is currently played may be sent to an audience in a movie hall. When in need, the user may further control, at home by using the advertisement, a television to play a movie or movie clip corresponding to the advertisement. This can further deepen an impression of the user on the advertisement, and fully exert an advertisement effect of the media content.

Optionally, as another embodiment, the second request further includes identification information of a second display apparatus, and before the first server sends the second media content to the third display apparatus that is associated with the second display apparatus, the method 100 may further include: determining, by the first server, the third display apparatus according to the identification information of the second display apparatus.

The identification information of the second display apparatus may include geographic location information of the second display apparatus or information about a network to which the second display apparatus currently connects. It should be understood that, the identification information may further include other information that can identify the second display apparatus, which is not limited in this embodiment of the present invention.

In this way, the first server can automatically determine, according to the second request, the third display apparatus that plays the fourth media content.

In this embodiment of the present invention, when the third media content is an advertisement, media content corresponding to an advertisement that is being watched/read by a user is sent to another display apparatus, so that the media content is played for the user by using the display apparatus, which can deepen an impression of the user on the advertisement, thereby fully exerting an advertisement effect.

FIG. 2 is a schematic flowchart of a media content playing method 200 according to another embodiment of the present invention. The method 200 corresponds to the method 100, and corresponding description is appropriately omitted herein. As shown in FIG. 2, the method 200 may include the following content.

210. A second server receives first information sent by a first server, where the first information corresponds to first media content that is currently played by a first display apparatus.

220. The second server sends second media content corresponding to the first information to a second display apparatus that is associated with the first display apparatus, so that the second display apparatus plays the second media content.

It should be understood that, media content and corresponding information thereof may be stored on the second server in advance.

The second server may send the second media content to multiple second display apparatuses.

The second media content may be an advertisement, and correspondingly, the second server may be configured to store advertisement content.

For example, in a cinema, the second server may send an advertisement associated with a movie that is being played to a terminal that is used by an audience in a movie hall. Because a possibility that a user buys a related commodity shown in media content (such as a movie) that is being watched/read is relatively high, a target group of people may be positioned more precisely in this embodiment of the present invention.

Therefore, according to the media content playing method in this embodiment of the present invention, second media content corresponding to first media content that is currently played by a first display apparatus is sent to a second display apparatus, so that the second display apparatus plays the second media content, and therefore a user can watch/read the second media content at the same time while watching/reading, by the user, of the first media content that is played by the first display apparatus is not affected, and when the second media content is an advertisement, an advertisement effect of the first media content can further be fully exerted.

Optionally, 220 may include: determining, by the second server, the second media content corresponding to the first information; generating, by the second server, an electronic magazine including the second media content; and sending, by the second server, the electronic magazine to the second display apparatus.

For example, when the second media content is an advertisement, generating an electronic magazine including the second media content can bear more abundant content than a single advertisement manner, and can better stimulate a desire of a user to buy.

Optionally, as another embodiment, before 230, the method 200 may further include: receiving, by the second server, identification information that is of the first display apparatus and sent by the first server; and determining, by the second server, the second display apparatus according to the identification information.

Specifically, the identification information may include geographic location information of the first display apparatus or information about a network to which the first display apparatus currently connects. It should be understood that, the identification information may further include other information that can identify the second display apparatus, which is not limited in this embodiment of the present invention.

For example, in a cinema, when a display apparatus used by a user connects to public WiFi (Wireless Fidelity, Wireless Fidelity) in a movie hall, and when a movie is played, the second server may send an advertisement associated with a movie that is being played to the display apparatus connected to the public WiFi.

For example, in a public area, the second server may further send, according to the geographic location information, related advertisement to a second display apparatus that is away from the first display apparatus within a predetermined range.

In addition, the second server may further send different advertisements to second display apparatuses of different users according to registration information of the second display apparatus. For example, when a Transformer is played, the second server may send an advertisement of a Transformers garage kit to a mobile phone used by a male audience; and when a female actor is played, the second server sends an advertisement of apparel to a mobile phone used by a female audience of an appropriate age.

In this embodiment of the present invention, a display apparatus of a proper user is determined according to geographic location information or information about a connected network, and different advertisements are sent to different display apparatuses according to registration information of the display apparatus, thereby implementing personalized advertisement delivery, and further improving an advertisement effect.

FIG. 3 is a media content playing method 300 according to another embodiment of the present invention. The method 300 corresponds to the method 100 and the method 200, and corresponding description is appropriately omitted herein. As shown in FIG. 3, the method 300 may include the following content.

310. A second display apparatus receives second media content sent by a second server, where the second media content corresponds to first media content that is being played by a first display apparatus.

320. The second display apparatus plays the second media content.

The second media content may be an advertisement.

Therefore, according to the media content playing method in this embodiment of the present invention, second media content that is sent by a second server and that corresponds to first media content that is currently played by a first display apparatus is received, and the second media content is played, so that a user can watch/read the second media content at the same time while watching/reading of the first media content by the user is not affected, and when the second media content is an advertisement, an advertisement effect of the first media content can further be fully exerted.

For example, when watching a movie in a cinema, a user may receive an advertisement sent by the second server.

Optionally, as another embodiment, 310 may include: receiving an electronic magazine that includes the second media content and that is sent by the second server.

In this embodiment of the present invention, the electronic magazine may include multiple pieces of media content.

Optionally, as another embodiment, the method 300 may further include:
receiving, by the second display apparatus, a first request of a user, where the first request is used to instruct to play fourth media content corresponding to currently presented third media content; and
sending, by the second display apparatus, a second request to a first server, where the second request includes second information corresponding to the third media content, and the second request is used to instruct the first server to send the fourth media content to a third display apparatus that is associated with the second display apparatus, so that the third display apparatus plays the fourth media content.

The third media content may be an advertisement, and correspondingly, the fourth media content may be media content corresponding to the advertisement. It should be understood that, the fourth media content may be complete media content, or may be a clip, from the media content, showing the advertisement. For example, the fourth media content may be a movie implanted with the advertisement or a clip, from the movie, showing the advertisement.

For example, when a user watches/reads an advertisement of a brand shirt, a first display apparatus may be controlled, by using the second display apparatus, to play a clip of a movie in which an actor wears the brand shirt.

In this embodiment of the present invention, when a user uses the second display apparatus to watch/read an advertisement, the first display apparatus may further be controlled, by using the second display apparatus, to play media content corresponding to an advertisement that is currently watched/read.

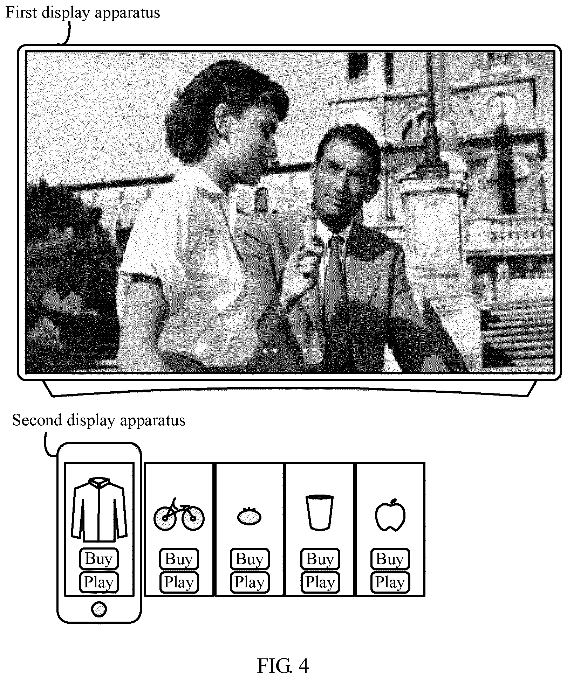

For example, a play icon may be presented on an interface of the second display apparatus (such as a smartphone) that plays an advertisement. As shown in FIG. 4, the user may tap the play icon to send a second request to the second display apparatus; a media content server sends, according to the second request, media content or a media content clip corresponding to the advertisement to the first display apparatus (such as a television), and the user can watch, by using the television, the media content or media content clip corresponding to the advertisement.

It should be understood that, the user may further send the second request to the second display apparatus in another manner, for example, pressing a preset button of the second display apparatus, which is not limited in this embodiment of the present invention.

In this embodiment of the present invention, at the same time when watching/reading an advertisement by using a display apparatus, a user can further watch/read, by using another display apparatus, media content or a media content clip corresponding to the advertisement, which can deepen an impression of the user on the advertisement by using the media content, thereby fully exerting an advertisement effect.

Optionally, as another embodiment, when the second media content is an advertisement, the method 300 may further include: receiving, by the second display apparatus, a buying request of a user, where the buying request is used to instruct to buy a commodity in the advertisement; and executing, by the second display apparatus, a commodity buying procedure according to the buying request.

For example, a buying icon may be presented on an interface of a smartphone that plays an advertisement. As shown in FIG. 4, the user may directly buy a commodity in the advertisement by tapping the buying icon.

In this embodiment of the present invention, the user may directly buy a commodity corresponding to an advertisement that is being watched/read, so that an advertisement effect and buying experience can be combined well.

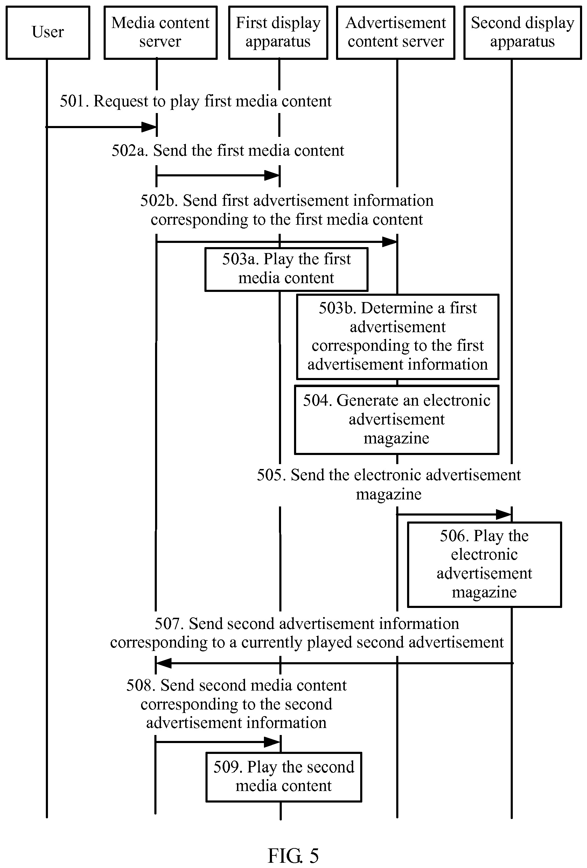

With reference to FIG. 5, the following describes in detail a media content playing method 500 according to an embodiment of the present invention. The method 500 is an example of the methods shown in FIG. 1 to FIG. 3, and corresponding description is appropriately omitted herein. The method 500 is described by using an example in which a first display apparatus is configured to play media content (such as a movie and a video), and a second display apparatus is configured to play an advertisement; where, a media content server, an advertisement content server, first advertisement information, second advertisement information, a first advertisement, and a second advertisement respectively correspond to the first server, the second server, the first information, the second information, the second media content, and the third media content in the methods shown in FIG. 1 to FIG. 3, and second media content corresponds to the fourth media content in the methods shown in FIG. 1 to FIG. 3.

As shown in FIG. 5, the method 500 may include the following content.

501. A user requests a media content server to play first media content.

502a. The media content server sends the first media content to a first display apparatus.

502b. The media content server sends first advertisement information corresponding to the first media content to an advertisement content server.

It should be understood that, the first advertisement information may be one or more pieces of advertisement information. The advertisement information may be a keyword, a serial number, or the like that identifies an advertisement.

Optionally, the media content server sends identification information of the first display apparatus to the advertisement content server.

503a. The first display apparatus plays the first media content.

503b. The advertisement content server determines a first advertisement corresponding to the first advertisement information.

It should be understood that, in this embodiment of the present invention, a sequence of steps 502a and 502b and steps 503a and 503b is not limited, and steps 502a and 502b and steps 503a and 503b may also be executed at the same time.

504. The advertisement content server generates an electronic magazine including the first advertisement.

Optionally, the advertisement content server may further determine a second display apparatus according to the identification information that is of the first display apparatus and sent by the media content server.

505. The advertisement content server sends the electronic magazine to the second display apparatus.

506. The second display apparatus plays the electronic magazine. When a user of the second display apparatus wants to watch/read second media content corresponding to a second advertisement that is of the electronic magazine and that is currently played, step 507 is executed.

507. The second display apparatus determines second advertisement information corresponding to the second advertisement, sends the second advertisement information to the media content server, and requests to play second media content corresponding to the second advertisement information.

Optionally, the second display apparatus may further send identification information of the second display apparatus to the media content server.

508. The media content server sends the second media content to the first display apparatus.

It should be understood that, in step 508, the media content server may further send the second media content to a third display apparatus.

Optionally, the media content server may further determine, according to the identification information of the second display apparatus, the first display apparatus or the third display apparatus associated with the second display apparatus.

509. The first display apparatus plays the second media content.

Correspondingly, in step 509, the third display apparatus plays the second media content.

It should be understood that sequence numbers of the foregoing processes do not mean execution sequences. The execution sequences of the processes should be determined according to functions and internal logic of the processes, and should not be construed as any limitation on the implementation processes of the embodiments of the present invention.

Therefore, according to the media content playing method in this embodiment of the present invention, at the same time when first media content is played, another server is allowed to send second media content corresponding to the first media content to another display apparatus, so that a user can watch/read the second media content at the same time while watching/reading of the first media content by the user is not affected, and when the second media content is an advertisement, an advertisement effect of the first media content can further be fully exerted.

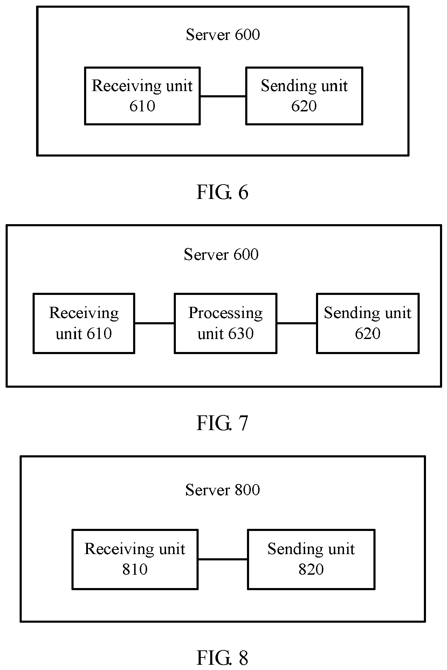

FIG. 6 is a schematic block diagram of a server 600 according to an embodiment of the present invention. As shown in FIG. 6, the server 600 includes: a receiving unit 610 and a sending unit 620.

The receiving unit 610 is configured to receive a first request of a user, where the first request is used to instruct to send first media content to a first display apparatus.

The sending unit 620 is configured to send the first media content to the first display apparatus according to the first request, so that the first display apparatus plays the first media content.

The sending unit 620 is further configured to send first information corresponding to the first media content to a second server, so that the second server sends second media content corresponding to the first information to a second display apparatus that is associated with the first display apparatus, and the second display apparatus is configured to play the second media content.

Therefore, according to the server in this embodiment of the present invention, at the same time when a first display apparatus plays first media content, another server is allowed to send second media content corresponding to the first media content to a second display apparatus, so that a user can watch/read the second media content while watching/reading of the first media content by the user is not affected, and when the second media content is an advertisement, an advertisement effect of the first media content can further be fully exerted.

Optionally, as another embodiment, the receiving unit 610 is further configured to receive a second request that is sent by the second display apparatus and includes second information, where the second information corresponds to third media content that is currently presented on the second display apparatus. As shown in FIG. 7, the server 600 further includes: a processing unit 630, configured to determine, according to the second request, fourth media content corresponding to the second information; and the sending unit 620 is further configured to send the fourth media content to a third display apparatus that is associated with the second display apparatus.

Optionally, as another embodiment, the second request further includes identification information of the second display apparatus, and the processing unit 630 is further configured to: before the sending unit 620 sends the second media content to the third display apparatus that is associated with the second display apparatus, determine the third display apparatus according to the identification information.

The identification information may include geographic location information of the second display apparatus or information about a network to which the second display apparatus currently connects.

It should be understood that, the server 600 according to this embodiment of the present invention may correspond to the first server in the media content playing method 100 according to the embodiment of the present invention, and the foregoing and other operations and/or functions of various modules of the server 600 are intended to implement corresponding procedures of the method 100 shown in FIG. 1 respectively. For brevity, details are not described herein again.

Therefore, according to the server in this embodiment of the present invention, at the same time when a first display apparatus plays first media content, another server is allowed to send second media content corresponding to the first media content to a second display apparatus, so that a user can watch/read the second media content at the same time while watching/reading of the first media content by the user is not affected, and when the second media content is an advertisement, an advertisement effect of the first media content can further be fully exerted.

FIG. 8 is a server 800 according to an embodiment of the present invention. As shown in FIG. 8, the server 800 includes: a receiving unit 810 and a sending unit 820.

The receiving unit 810 is configured to receive first information sent by a first server, where the first information corresponds to first media content that is currently played by a first display apparatus.

The sending unit 820 is configured to send second media content corresponding to the first information to a second display apparatus that is associated with the first display apparatus, so that the second display apparatus plays the second media content.

Therefore, according to the server in this embodiment of the present invention, second media content corresponding to first media content that is currently played by a first display apparatus is sent to a second display apparatus, so that the second display apparatus plays the second media content, and therefore a user can watch/read the second media content at the same time while watching/reading, by the user, of the first media content that is played by the first display apparatus is not affected, and when the second media content is an advertisement, an advertisement effect of media content can further be better exerted.

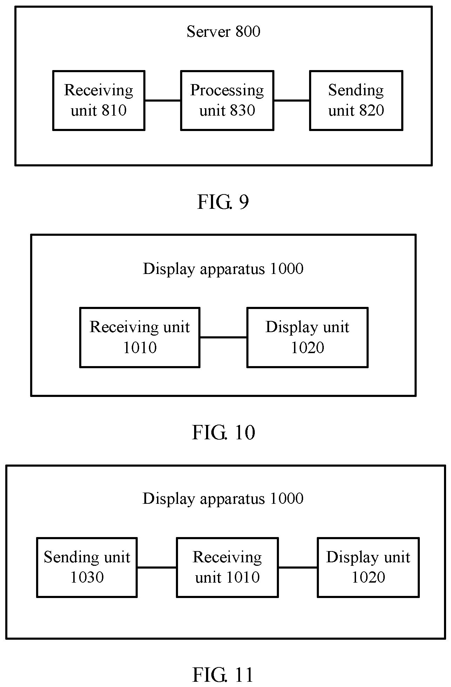

Optionally, as another embodiment, as shown in FIG. 9, the server 800 further includes: a processing unit 830, configured to: determine the second media content corresponding to the first information; and generate an electronic magazine including the second media content; and the sending unit 820 is further configured to send the electronic magazine to the second display apparatus.

Optionally, as another embodiment, the receiving unit 810 is further configured to: before the sending unit 820 sends the second media content corresponding to the first information to the second display apparatus that is associated with the first display apparatus, receive identification information that is of the first display apparatus and sent by the first server; and the processing unit 830 is further configured to determine the second display apparatus according to the identification information.

The identification information includes geographic location information of the first display apparatus or information about a network to which the first display apparatus currently connects.

It should be understood that, the server 800 according to this embodiment of the present invention may correspond to the second server in the media content playing method 200 according to the embodiment of the present invention, and the foregoing and other operations and/or functions of various modules of the server 800 are intended to implement corresponding procedures of the method 200 shown in FIG. 2 respectively. For brevity, details are not described herein again.

Therefore, according to the server in this embodiment of the present invention, second media content corresponding to first media content that is currently played by a first display apparatus is sent to a second display apparatus, so that the second display apparatus plays the second media content, and therefore a user can watch/read the second media content at the same time while watching/reading, by the user, of the first media content that is played by the first display apparatus is not affected, and when the second media content is an advertisement, an advertisement effect of media content can further be better exerted.

FIG. 10 is a display apparatus 1000 according to an embodiment of the present invention. As shown in FIG. 10, the display apparatus 1000 includes: a receiving unit 1010 and a display unit 1020.

The receiving unit 1010 is configured to receive second media content sent by a second server, where the second media content corresponds to first media content that is being played by a first display apparatus.

The display unit 1020 is configured to play the second media content.

Therefore, according to the display apparatus in this embodiment of the present invention, second media content that is sent by a second server and that corresponds to first media content that is currently played by a first display apparatus is received, and the second media content is played, so that a user can watch/read the second media content at the same time while watching/reading of the first media content by the user is not affected, and when the second media content is an advertisement, an advertisement effect of the first media content can further be fully exerted.

Optionally, as another embodiment, the receiving unit 1010 is specifically configured to receive an electronic magazine that includes the second media content and that is sent by the second server.

Optionally, as another embodiment, the receiving unit 1010 is further configured to receive a first request of a user, where the first request is used to instruct to play fourth media content corresponding to currently presented third media content. As shown in FIG. 11, the display apparatus 1000 further includes: a sending unit 1030, configured to send a second request to a first server, where the second request includes second information corresponding to the third media content, and the second request is used to instruct the first server to send the fourth media content to a third display apparatus that is associated with the second display apparatus, so that the third display apparatus plays the fourth media content.

Optionally, the second request may further include identification information of the second display apparatus.

The identification information may include geographic location information of the second display apparatus and/or information about a network to which the second display apparatus currently connects.

It should be understood that, the display apparatus 1000 according to this embodiment of the present invention may correspond to the second display apparatus in the media content playing method 300 according to the embodiment of the present invention, and the foregoing and other operations and/or functions of various modules of the display apparatus 1000 are intended to implement corresponding procedures of the method 300 shown in FIG. 3 respectively. For brevity, details are not described herein again.

Therefore, according to the display apparatus in this embodiment of the present invention, second media content that is sent by a second server and that corresponds to first media content that is currently played by a first display apparatus is received, and the second media content is played, so that a user can watch/read the second media content at the same time while watching/reading of the first media content by the user is not affected, and when the second media content is an advertisement, an advertisement effect of the first media content can further be fully exerted.

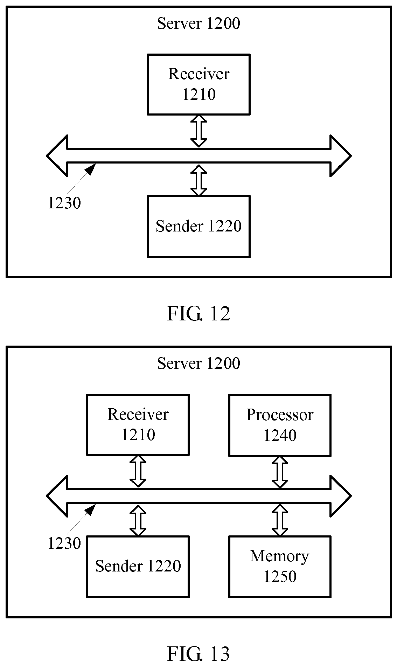

FIG. 12 is a schematic block diagram of a server 1200 according to another embodiment of the present invention. As shown in FIG. 12, the server 1200 includes: a receiver 1210, a sender 1220, and a bus system 1230. The receiver 1210 and the sender 1220 are connected by using the bus system 1230.

The receiver 1210 is configured to receive a first request of a user, where the first request is used to instruct to send first media content to a first display apparatus.

The sender 1220 is configured to send the first media content to the first display apparatus according to the first request, so that the first display apparatus plays the first media content.

The sender 1220 is further configured to send first information corresponding to the first media content to a second server, so that the second server sends second media content corresponding to the first information to a second display apparatus that is associated with the first display apparatus, and the second display apparatus is configured to play the second media content.

Therefore, according to the server in this embodiment of the present invention, at the same time when a first display apparatus plays first media content, another server is allowed to send second media content corresponding to the first media content to a second display apparatus, so that a user can watch/read the second media content while watching/reading of the first media content by the user is not affected, and when the second media content is an advertisement, an advertisement effect of the first media content can further be fully exerted.

Optionally, as another embodiment, as shown in FIG. 13, the server 1200 further includes: a processor 1240 and a memory 1250. The processor 1240 may also be referred to as a CPU (Central Processing Unit, central processing unit). The memory 1250 may include a read-only memory and a random access memory, and provide an instruction and data to the processor 1240. Apart of the memory 1250 may further include a non-volatile random access memory (NVRAM).

The receiver 1210 is further configured to receive a second request that is sent by the second display apparatus and includes second information, where the second information corresponds to third media content that is currently presented on the second display apparatus. The processor 1240 is configured to determine fourth media content corresponding to the second information. The sender 1220 is further configured to send the fourth media content to a third display apparatus that is associated with the second display apparatus.

Optionally, as another embodiment, the second request further includes identification information of the second display apparatus, and the processor 1240 is further configured to: before the sender 1220 sends the second media content to the third display apparatus that is associated with the second display apparatus, determine the third display apparatus according to the identification information.

The identification information includes geographic location information of the second display apparatus or information about a network to which the second display apparatus currently connects.

It should be understood that, the server 1200 according to this embodiment of the present invention may correspond to the first server in the media content playing method 100 according to the embodiment of the present invention and the server 600 according to the embodiment of the present invention, and the foregoing and other operations and/or functions of various modules of the server 1200 are intended to implement corresponding procedures of the method 100 shown in FIG. 1 respectively. For brevity, details are not described herein again.

Therefore, according to the server in this embodiment of the present invention, at the same time when a first display apparatus plays first media content, another server is allowed to send second media content corresponding to the first media content to a second display apparatus, so that a user can watch/read the second media content while watching/reading of the first media content by the user is not affected, and when the second media content is an advertisement, an advertisement effect of the first media content can further be fully exerted.

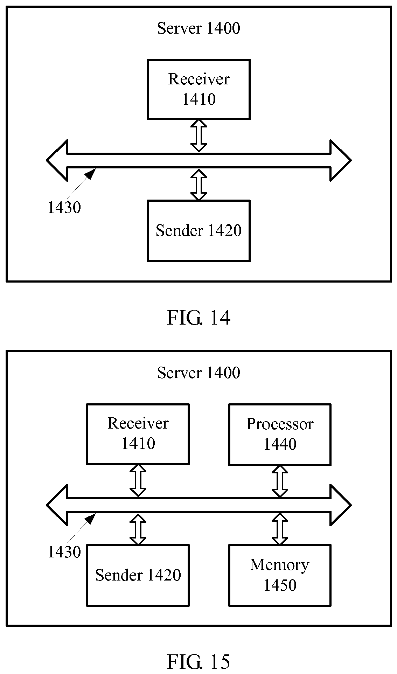

FIG. 14 is a server 1400 according to another embodiment of the present invention. As shown in FIG. 1400, the server 1400 includes: a receiver 1410, a sender 1420, and a bus system 1430. The receiver 1410 and the sender 1420 are connected by using the bus system 1430.

The receiver 1410 is configured to receive first information sent by a first server, where the first information corresponds to first media content that is currently played by a first display apparatus.

The sender 1420 is configured to send second media content corresponding to the first information to a second display apparatus that is associated with the first display apparatus, so that the second display apparatus plays the second media content.

Therefore, according to the server in this embodiment of the present invention, second media content corresponding to first media content that is currently played by a first display apparatus is sent to a second display apparatus, so that the second display apparatus plays the second media content, and therefore a user can watch/read the second media content at the same time while watching/reading, by the user, of the first media content that is played by the first display apparatus is not affected, and when the second media content is an advertisement, an advertisement effect of the media content can further be better exerted.

Optionally, as shown in FIG. 15, the server 1400 further includes: a processor 1440 and a memory 1450. The processor 1440 may also be referred to as a CPU (Central Processing Unit, central processing unit). The memory 1450 may include a read-only memory and a random access memory, and provide an instruction and data to the processor 1440. A part of the memory 1450 may further include a non-volatile random access memory (NVRAM).

The processor 1440 is configured to: determine the second media content corresponding to the first information; and generate an electronic magazine including the second media content.

The sender 1420 is further configured to send the electronic magazine to the second display apparatus.

Optionally, as another embodiment, the receiver 1410 is further configured to: before the sender 1420 sends the second media content corresponding to the first information to the second display apparatus that is associated with the first display apparatus, receive identification information that is of the first display apparatus and sent by the first server. The processor 1440 is further configured to determine the second display apparatus according to the identification information.

The identification information includes geographic location information of the first display apparatus or information about a network to which the first display apparatus currently connects.

It should be understood that, the server 1400 according to this embodiment of the present invention may correspond to the second server in the media content playing method 200 according to the embodiment of the present invention and the server 800 according to the embodiment of the present invention, and the foregoing and other operations and/or functions of various modules of the server 1400 are intended to implement corresponding procedures of the method 200 shown in FIG. 2 respectively. For brevity, details are not described herein again.

Therefore, according to the server in this embodiment of the present invention, second media content corresponding to first media content that is currently played by a first display apparatus is sent to a second display apparatus, so that the second display apparatus plays the second media content, and therefore a user can watch/read the second media content at the same time while watching/reading, by the user, of the first media content that is played by the first display apparatus is not affected, and when the second media content is an advertisement, an advertisement effect of the media content can further be better exerted.

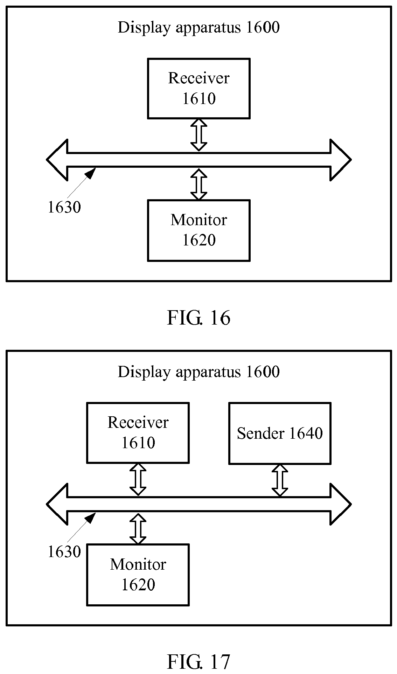

FIG. 16 is a display apparatus according to another embodiment of the present invention. As shown in FIG. 16, a display apparatus 1600 includes: a receiver 1610, a display 1620, and a bus system 1630. The receiver 1610 and the display 1620 are connected by using the bus system 1630.

The receiver 1610 is configured to receive second media content sent by a second server, where the second media content corresponds to first media content that is being played by a first display apparatus.

The display 1620 is configured to play the second media content.

Therefore, according to the display apparatus in this embodiment of the present invention, second media content that is sent by a second server and that corresponds to first media content that is currently played by a first display apparatus is received, and the second media content is played, so that a user can watch/read the second media content at the same time while watching/reading of the first media content by the user is not affected, and when the second media content is an advertisement, an advertisement effect of the first media content can further be fully exerted.

Optionally, the receiver 1610 is specifically configured to receive an electronic magazine that includes the second media content and that is sent by the second server.

Optionally, as another embodiment, as shown in FIG. 17, the display apparatus 1600 further includes a sender 1640.

The receiver 1610 is further configured to receive a first request of a user, where the first request is used to instruct to play fourth media content corresponding to currently presented third media content. The sender 1640 is configured to send a second request to a first server, where the second request includes second information corresponding to the third media content, and the second request is used to instruct the first server to send the fourth media content to a third display apparatus that is associated with the second display apparatus, so that the third display apparatus plays the fourth media content.

Optionally, the second request may further include identification information of the second display apparatus.

The identification information includes geographic location information of the second display apparatus and/or information about a network to which the second display apparatus currently connects.

It should be understood that, the display apparatus 1600 according to this embodiment of the present invention may correspond to the second display apparatus in the media content playing method 300 according to the embodiment of the present invention and the display apparatus 1000 according to the embodiment of the present invention, and the foregoing and other operations and/or functions of various modules of the display apparatus 1600 are intended to implement corresponding procedures of the method 300 shown in FIG. 3 respectively. For brevity, details are not described herein again.

Therefore, according to the display apparatus in this embodiment of the present invention, second media content that is sent by a second server and that corresponds to first media content that is currently played by a first display apparatus is received, and the second media content is played, so that a user can watch/read the second media content at the same time while watching/reading of the first media content by the user is not affected, and when the second media content is an advertisement, an advertisement effect of the first media content can further be fully exerted.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A media content playing method, **characterized by** comprising:
receiving (110), by a first server, a first request of a user, wherein the first request is used to instruct to send first media content to a first display apparatus;
sending (120), by the first server, the first media content to the first display apparatus according to the first request, so that the first display apparatus plays the first media content; and
sending (130), by the first server, first information corresponding to the first media content to a second server, so that the second server sends second media content corresponding to the first information to a second display apparatus that is associated with the first display apparatus, and the second display apparatus is configured to play the second media content;
receiving, by the first server, a second request that is sent by the second display apparatus and comprises second information, wherein the second information corresponds to third media content that is currently presented on the second display apparatus;
determining, by the first server according to the second request, fourth media content corresponding to the second information; and
sending, by the first server, the fourth media content to a third display apparatus that is associated with the second display apparatus;
wherein the second request further comprises identification information of the second display apparatus, and before the sending, by the first server, the fourth media content to a third display apparatus that is associated with the second display apparatus, the method further comprises:
determining, by the first server, the third display apparatus according to the identification information.

2. The method according to claim 1, wherein, the identification information comprises geographic location information of the second display apparatus or information about a network to which the second display apparatus currently connects.

3. A server (600), **characterized by** comprising:
a receiving unit (610), configured to receive a first request of a user, wherein the first request is used to instruct to send first media content to a first display apparatus; and
a sending unit (620), configured to send the first media content to the first display apparatus according to the first request, so that the first display apparatus plays the first media content; wherein
the sending unit is further configured to send first information corresponding to the first media content to a second server, so that the second server sends second media content corresponding to the first information to a second display apparatus (1000) that is associated with the first display apparatus, and the second display apparatus is configured to play the second media content;
wherein the receiving unit is further configured to receive a second request that is sent by the second display apparatus and comprises second information, wherein the second information corresponds to third media content that is currently presented on the second display apparatus;
the server further comprises:
a processing unit (630), configured to determine, according to the second request, fourth media content corresponding to the second information; and
the sending unit is further configured to send the fourth media content to a third display apparatus that is associated with the second display apparatus;
wherein the second request further comprises identification information of the second display apparatus, and the processing unit is further configured to: before the sending unit sends the fourth media content to the third display apparatus that is associated with the second display apparatus, determine the third display apparatus according to the identification information.

4. The server according to claim 3, wherein the identification information comprises geographic location information of the second display apparatus or information about a network to which the second display apparatus currently connects.

## Patentansprüche

1. Wiedergabeverfahren für Medieninhalte, **dadurch gekennzeichnet, dass** es umfasst:
Empfangen (110), durch einen ersten Server, einer ersten Anforderung eines Benutzers, wobei die erste Anforderung verwendet wird, um den ersten Medieninhalt an eine erste Anzeigevorrichtung zu senden;
Senden (120), durch den ersten Server, des ersten Medieninhalts an die erste Anzeigevorrichtung gemäß der ersten Anforderung, sodass die erste Anzeigevorrichtung den ersten Medieninhalt wiedergibt; und
Senden (130), durch den ersten Server, der ersten Information, die dem ersten Medieninhalt entspricht, an einen zweiten Server, sodass der zweite Server den der ersten Information entsprechenden zweiten Medieninhalt an eine zweite Anzeigevorrichtung sendet, die der ersten Anzeigevorrichtung zugeordnet ist, und die zweite Anzeigevorrichtung konfiguriert ist, um den zweiten Medieninhalt wiederzugeben;
Empfangen, durch den ersten Server, einer zweiten Anforderung, die von der zweiten Anzeigevorrichtung gesendet wird und eine zweite Information umfasst, wobei die zweite Information einem dritten Medieninhalt entspricht, der aktuell auf der zweiten Anzeigevorrichtung dargestellt wird;
Bestimmen, durch den ersten Server gemäß der zweiten Anforderung, eines vierten Medieninhalts, der der zweiten Information entspricht; und
Senden, durch den ersten Server, des vierten Medieninhalts an eine dritte Anzeigevorrichtung, die der zweiten Anzeigevorrichtung zugeordnet ist;
wobei die zweite Anforderung ferner eine Kennungsinformation der zweiten Anzeigevorrichtung umfasst, und vor dem Senden, durch den ersten Server, des vierten Medieninhalts an eine dritte Anzeigevorrichtung, die der zweiten Anzeigevorrichtung zugeordnet ist, das Verfahren ferner umfasst:
Bestimmen, durch den ersten Server, der dritten Anzeigevorrichtung gemäß der Kennungsinformation.

2. Verfahren nach Anspruch 1, wobei die Kennungsinformation eine geografische Standortinformation der zweiten Anzeigevorrichtung oder eine Information über ein Netzwerk umfasst, mit dem sich die zweite Anzeigevorrichtung aktuell verbindet.

3. Server (600), **dadurch gekennzeichnet, dass** er umfasst:
eine Empfangseinheit (610), die konfiguriert ist, um eine erste Anforderung eines Benutzers zu empfangen, wobei die erste Anforderung verwendet wird, um den ersten Medieninhalt an eine erste Anzeigevorrichtung zu senden; und
eine Sendeeinheit (620), die konfiguriert ist, um den ersten Medieninhalt an die erste Anzeigevorrichtung gemäß der ersten Anforderung zu senden, sodass die erste Anzeigevorrichtung den ersten Medieninhalt wiedergibt; wobei die Sendeeinheit ferner konfiguriert ist, um die erste Information, die dem ersten Medieninhalt entspricht, an einen zweiten Server zu senden, sodass der zweite Server den der ersten Information entsprechenden zweiten Medieninhalt an eine zweite Anzeigevorrichtung (1000) sendet, die der ersten Anzeigevorrichtung zugeordnet ist,
und die zweite Anzeigevorrichtung konfiguriert ist, um den zweiten Medieninhalt wiederzugeben;
wobei die Empfangseinheit ferner konfiguriert ist, um eine zweite Anforderung zu empfangen, die von der zweiten Anzeigevorrichtung gesendet wird und eine zweite Information umfasst, wobei die zweite Information einem dritten Medieninhalt entspricht, der aktuell auf der zweiten Anzeigevorrichtung dargestellt wird;
der Server ferner umfasst:
eine Verarbeitungseinheit (630), die konfiguriert ist, um gemäß der zweiten Anforderung einen vierten Medieninhalt zu bestimmen, der der zweiten Information entspricht; und
die Sendeeinheit ferner konfiguriert ist, um den vierten Medieninhalt an eine dritte Anzeigevorrichtung zu senden, die der zweiten Anzeigevorrichtung zugeordnet ist;
wobei die zweite Anforderung ferner eine Kennungsinformation der zweiten Anzeigevorrichtung umfasst, und die Verarbeitungseinheit ferner konfiguriert ist, um: bevor die Sendeeinheit den vierten Medieninhalt an die dritte Anzeigevorrichtung sendet, die der zweiten Anzeigevorrichtung zugeordnet ist, die dritte Anzeigevorrichtung gemäß der Kennungsinformation zu bestimmen.

4. Server nach Anspruch 3, wobei die Kennungsinformation eine geografische Standortinformation der zweiten Anzeigevorrichtung oder eine Information über ein Netzwerk umfasst, mit dem sich die zweite Anzeigevorrichtung aktuell verbindet.

## Revendications

1. Procédé de lecture du contenu d'un support multimédia, **caractérisé en ce qu'**il comprend les étapes consistant à :
recevoir (110), par un premier serveur, une première demande d'un utilisateur, la première demande étant utilisée pour ordonner l'envoi d'un premier contenu multimédia à un premier appareil d'affichage ;
envoyer (120), par le premier serveur, le premier contenu multimédia au premier appareil d'affichage conformément à la première demande, de sorte que le premier appareil d'affichage lise le premier contenu multimédia ; et
envoyer (130), par le premier serveur, des premières informations correspondant au premier contenu multimédia à un second serveur, de sorte que le second serveur envoie un second contenu multimédia correspondant aux premières informations à un second appareil d'affichage associé au premier appareil d'affichage et le second appareil d'affichage est configuré pour lire le second contenu multimédia ;
recevoir, par le premier serveur, une seconde demande qui est envoyée par le second appareil d'affichage et comprend une seconde information, la seconde information correspondant à un troisième contenu multimédia qui est actuellement présenté sur le second appareil d'affichage ;
déterminer, par le premier serveur selon la seconde demande, un quatrième contenu multimédia correspondant à la seconde information ; et
envoyer, par le premier serveur, le quatrième contenu multimédia à un troisième appareil d'affichage associé au second appareil d'affichage ;
dans lequel la seconde demande comprend en outre des informations d'identification du second appareil d'affichage et, avant l'envoi, par le premier serveur, du quatrième contenu multimédia à un troisième appareil d'affichage associé au second appareil d'affichage, le procédé comprend en outre l'étape consistant à :
déterminer, par le premier serveur, le troisième appareil d'affichage en fonction des informations d'identification.

2. Procédé selon la revendication 1, dans lequel, les informations d'identification comprennent des informations de localisation géographique du second appareil d'affichage ou des informations concernant un réseau auquel le second appareil d'affichage se connecte actuellement.

3. Serveur (600), **caractérisé en ce qu'**il comprend :
une unité de réception (610), configurée pour recevoir une première demande d'un utilisateur, la première demande étant utilisée pour ordonner l'envoi d'un premier contenu multimédia à un premier appareil d'affichage ; et
une unité d'envoi (620), configurée pour envoyer le premier contenu multimédia au premier appareil d'affichage conformément à la première demande, de sorte que le premier appareil d'affichage lise le premier contenu multimédia ; dans lequel l'unité d'envoi est en outre configurée pour envoyer des premières informations correspondant au premier contenu multimédia à un second serveur, de sorte que le second serveur envoie le second contenu multimédia correspondant aux premières informations à un second appareil d'affichage (1000) associé au premier appareil d'affichage, et le second appareil d'affichage est configuré pour lire le second contenu multimédia ;
dans lequel l'unité de réception est configurée en outre pour recevoir, une seconde demande qui est envoyée par le second appareil d'affichage et comprend une seconde information, la seconde information correspondant à un troisième contenu multimédia qui est actuellement présenté sur le second appareil d'affichage ;
le serveur comprenant en outre :
une unité de traitement (630), configurée pour déterminer, en fonction de la seconde demande, un quatrième contenu multimédia correspondant à la seconde information ; et
l'unité d'envoi est en outre configurée pour envoyer le quatrième contenu multimédia à un troisième appareil d'affichage qui est associé au second appareil d'affichage ;
dans lequel la seconde demande comprend en outre des informations d'identification du second appareil d'affichage, et l'unité de traitement est en outre configurée pour : avant que l'unité d'envoi n'envoie le quatrième contenu multimédia au troisième appareil d'affichage associé au second appareil d'affichage, déterminer le troisième appareil d'affichage en fonction des informations d'identification.

4. Serveur selon la revendication 3, dans lequel les informations d'identification comprennent des informations de localisation géographique du second appareil d'affichage ou des informations concernant un réseau auquel le second appareil d'affichage se connecte actuellement.
